(19) Europäisches Patentamt
European Patent Office
Office européen des brevets

(11) **EP 2 866 000 B1**

(12) **FASCICULE DE BREVET EUROPEEN**

(45) Date de publication et mention
de la délivrance du brevet:
**11.03.2020 Bulletin 2020/11**

(21) Numéro de dépôt: **14189702.5**

(22) Date de dépôt: **21.10.2014**

(51) Int Cl.:
*G01D 5/26* (2006.01)      *G01D 5/353* (2006.01)
*G01G 3/16* (2006.01)      *G01V 7/00* (2006.01)
*G02B 6/293* (2006.01)      *G02B 6/12* (2006.01)
*G02B 6/35* (2006.01)      *G01N 5/00* (2006.01)
*G01N 15/06* (2006.01)

(54) **Dispositif optomécanique d'actionnement et/ou de détection du déplacement d'un élément mécanique, notamment pour la détection gravimétrique**

Optomechanische Vorrichtung zum Betätigen und/oder Erkennen einer Bewegung eines mechanischen Elements, insbesondere für die gravimetrische Erfassung

Optomechanical device for actuating and/or detecting the movement of a mechanical element, in particular for gravimetric detection

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2013 FR 1360282**

(43) Date de publication de la demande:
**29.04.2015 Bulletin 2015/18**

(73) Titulaire: **Commissariat à l'Énergie Atomique et aux Énergies Alternatives 75015 Paris (FR)**

(72) Inventeurs:
• **Hentz, Sébastien
38760 VARCES ALLIERES ET RISSET (FR)**
• **Duraffourg, Laurent
38500 VOIRON (FR)**
• **Jourdan, Guillaume
38000 GRENOBLE (FR)**

(74) Mandataire: **Brevalex
95, rue d'Amsterdam
75378 Paris Cedex 8 (FR)**

(56) Documents cités:
US-A1- 2011 305 413      US-B1- 6 392 233
US-B1- 6 909 824

• LASSE J KAUPPINEN ET AL: "Micromechanically tuned ring resonator in silicon on insulator", OPTICS LETTERS, OPTICAL SOCIETY OF AMERICA, vol. 36, no. 7, avril 2011 (2011-04), pages 1047-1049, XP001561562, ISSN: 0146-9592, DOI: 10.1364/OL.36.001047 [extrait le 2011-03-16]
• PHAM S V ET AL: "Read-Out of Cantilever Bending With a Grated Waveguide Optical Cavity", IEEE PHOTONICS TECHNOLOGY LETTERS, IEEE SERVICE CENTER, PISCATAWAY, NJ, US, vol. 23, no. 4, février 2011 (2011-02), pages 215-217, XP011343868, ISSN: 1041-1135, DOI: 10.1109/LPT.2010.2097246 & GINO PUTRINO ET AL: "Model and Analysis of a High Sensitivity Resonant Optical Read-Out Approach Suitable for Cantilever Sensor Arrays", JOURNAL OF LIGHTWAVE TECHNOLOGY, IEEE SERVICE CENTER, NEW YORK, NY, US, vol. 30, no. 12, 1 juin 2012 (2012-06-01), pages 1863-1868, XP011441021, ISSN: 0733-8724, DOI: 10.1109/JLT.2012.2190973
• GINO PUTRINO ET AL: "Integrated Resonant Optical Readout Applicable to Large Arrays of MEMS Beams", IEEE PHOTONICS TECHNOLOGY LETTERS, IEEE SERVICE CENTER, PISCATAWAY, NJ, US, vol. 24, no. 24, 15 décembre 2012 (2012-12-15), pages 2243-2246, XP11489020, ISSN: 1041-1135, DOI: 10.1109/LPT.2012.2225611

EP 2 866 000 B1

- **REKHA R ET AL: "Design of MOEM vibration sensor using optical microring resonator and microcantilever beam", TENCON 2011 - 2011 IEEE REGION 10 CONFERENCE, IEEE, 21 novembre 2011 (2011-11-21), pages 747-751, XP032092591, DOI: 10.1109/TENCON.2011.6129209 ISBN: 978-1-4577-0256-3**
- **HOUXUN MIAO ET AL: "A MEMS controlled cavity optomechanical sensing system", LASERS AND ELECTRO-OPTICS (CLEO), 2012 CONFERENCE ON, IEEE, 6 mai 2012 (2012-05-06), pages 1-2, XP032245905, ISBN: 978-1-4673-1839-6**
- **HOSSEIN-ZADEH M ET AL: "An Optomechanical Oscillator on a Silicon Chip", IEEE JOURNAL OF SELECTED TOPICS IN QUANTUM ELECTRONICS, IEEE SERVICE CENTER, PISCATAWAY, NJ, US, vol. 16, no. 1, 1 January 2010 (2010-01-01), pages 276-287, XP011344345, ISSN: 1077-260X, DOI: 10.1109/JSTQE.2009.2031066**

**Description**

**DOMAINE TECHNIQUE**

La présente invention concerne un dispositif optomécanique d'actionnement et/ou de détection du déplacement d'un élément mécanique.

Ce dernier peut être un dispositif résonant, auquel cas l'élément mécanique constitue un résonateur, ou un dispositif non résonant.

L'invention s'applique notamment à la détection gravimétrique, de préférence à grande surface de capture.

Elle s'applique aussi à tout type de détection fréquentielle, par exemple dans le domaine de l'imagerie térahertz ou de la bolométrie.

**ÉTAT DE LA TECHNIQUE ANTÉRIEURE**

On connaît déjà des dispositifs résonants à actionnement dans le plan. Tous ces dispositifs comprennent des poutres qui sont parallèles aux substrats de ces dispositifs. On se référera aux documents suivants :

WO 2012/034949, invention de S. Hentz
WO 2012/034951, invention de S. Hentz et al.
WO 2012/034990, invention de S. Hentz.

On rappelle maintenant le principe de la détection résonante de masse (en anglais, *resonant mass detection*).

On considère une particule ou un ensemble de particules, de masse totale $m_p$, qui se pose sur la surface d'un résonateur, de raideur k et de masse effective m. La fréquence de résonance du résonateur devient alors égale à : $f = \frac{1}{2\pi}\sqrt{\frac{k}{m+m_p}}$. Les pics des réponses en fréquence (en boucle ouverte), avant et après dépôt de la masse $m_p$, sont donc décalés d'une quantité Δf qui est peu différente de $-\frac{m_p}{2m} \cdot \frac{1}{2\pi}\sqrt{\frac{k}{m}}$. Lorsque le résonateur est utilisé en boucle fermée, on peut donc suivre sa fréquence de résonance en temps réel à l'aide de moyens de transduction électrique et de moyens de fermeture de boucle.

On constate que l'adsorption d'une particule individuelle ou d'un groupe de particules d'un analyte sur la surface du résonateur fait décroître brutalement la fréquence de résonance de celui-ci. On peut déduire la masse de la particule ou du groupe de particules à partir de la mesure du saut en fréquence Δf.

Le principe de détection que l'on vient de rappeler est tout à fait générique, et l'on connaît divers dispositifs pour le mettre en application, notamment les résonateurs à ondes acoustiques de surface (en anglais, *surface acoustic wave resonators*), les résonateurs à ondes acoustiques de volume (en anglais, *bulk acoustic wave resonators*), les microbalances à cristal de quartz (en anglais, *quartz crystal microbalances*) et les poutres MEMS (pour « *Micro-Electro-Mechanical System* »).

Mais le dispositif résonant peut avantageusement être un NEMS puisque l'expression du saut en fréquence Δf, donnée plus haut, montre que la sensibilité de la fréquence à un ajout de masse est d'autant plus grande que la masse totale du résonateur est petite. Les dispositifs résonants de dimensions nanométriques ont donc un avantage certain en termes de sensibilité, mais aussi en termes de limite de détection. C'est ainsi que l'on a pu mesurer, avec des NEMS, des masses $10^{12}$ fois plus faibles que celles que l'on avait mesurées avec des microbalances à cristal de quartz. A ce sujet, on se reportera au document suivant :

K.L. Ekinci, Y. T. Tang et M. L. Roukes, 2004, "Ultimate limits to inertial mass sensing based upon nanoelectromechanical systems", Journal of Applied Physics 95 (5): 2682. doi:10.1063/1.1642738.

De même, on a pu récemment mesurer une masse de l'ordre de 1 yg ($10^{-27}$ kg). A ce sujet, on se reportera au document suivant :

J. Chaste, A. Eichler, J. Moser, G. Ceballos, R. Rurali et A. Bachtold, 2012, "A nanomechanical mass sensor with yoctogram resolution", Nature Nanotechnology 7: 301-304. doi:10.1038/nnano.2012.42.

Les applications de la détection résonante de masse sont multiples. On peut par exemple citer (1) les capteurs chimiques pour la détection de gaz, (2) les capteurs biologiques en milieu liquide pour la détection de cellules biologiques, et (3) la NEMS-MS, c'est-à-dire la spectrométrie de masse à base de NEMS (pour « *Nano-Electro-Mechanical System* »). Pour ces applications, la limite de détection (la masse détectable la plus faible) est bien sûr primordiale, non seulement afin de déterminer le plus précisément possible la quantité de matière mesurée, mais aussi afin de détecter des espèces très fortement dispersées ou diluées dans un grand volume d'un élément porteur.

(1) Dans le cas des capteurs chimiques pour la détection de gaz, on utilise un NEMS dont la surface peut être recouverte d'une couche de fonctionnalisation ayant une affinité chimique particulière envers certaines espèces à mesurer. Les particules correspondant à ces espèces sont absorbées dans cette couche ou, de manière homogène, sur toute la surface du NEMS.

Lorsque la concentration à mesurer devient très faible, la probabilité de capture des espèces par la surface extrêmement petite du NEMS devient très faible. On peut alors recourir à l'utilisation de réseaux (en anglais, *arrays*) qui sont collectivement adressés afin de bénéficier de la très bonne sensibilité des résonateurs. Mais on peut aussi utiliser une grande surface de capture. A ce sujet, on se reportera au document suivant :

I. Bargatin, E.B. Myers, J. S. Aldridge, C. Marcoux, P. Brianceau, L. Duraffourg, E. Colinet, S. Hentz, P. Andreucci, et M.L. Roukes, 2012, "Large-scale intégration of nanoelectromechanical systems for gas sensing applications", Nano letters 12 (3) (14 mars): 1269 -74. doi:10.1021/nl2037479

et plus particulièrement à la figure 1 de ce document.

(2) Dans le cas des capteurs biologiques en milieu liquide, la problématique est la même que pour les capteurs chimiques, mais est encore plus aigüe : le dispositif résonant est alors placé dans le milieu liquide où les particules biologiques sont à détecter; et l'on peut être amené à les détecter de manière individuelle tant leur concentration peut être faible. De même, on peut être amené à utiliser des réseaux de résonateurs, individuellement adressés ou non, fonctionnalisés ou non. A ce sujet, on se reportera au document suivant :

S. Guillon, S. Salomon, F. Seichepine, D. Dezest, F. Mathieu, A. Bouchier, L. Mazenq, C. Thibault, C. Vieu, T. Leïchlé et L. Nicu, 2012, "Biological functionalization of massively parallel arrays of nanocantilevers using microcontact printing", Sensors and Actuators B: Chemical 161 (Janvier): 1135-1138. doi:10.1016/j.snb.2011.10.084

et plus particulièrement à la figure 1 de ce document.

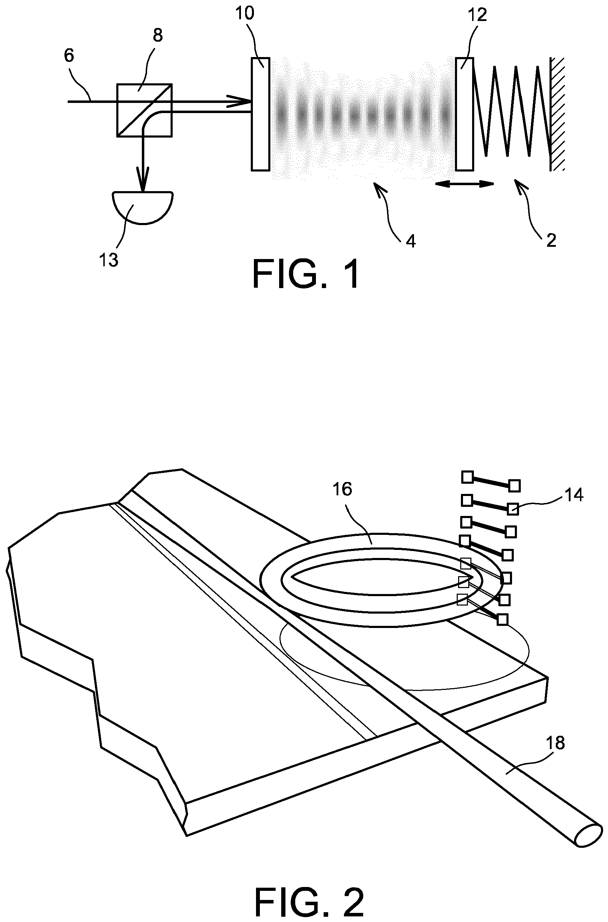

(3) Dans le cas de la NEMS-MS, il s'agit de mesurer la masse de chaque particule (par exemple biologique) d'un mélange qui est initialement en phase liquide et que l'on vient projeter sur un NEMS sous vide, afin de remonter au spectre de masse du contenu du mélange, pour des applications biomédicales d'identification par exemple. Un tel système est représenté sur la figure 1 du document suivant auquel on se reportera :

A.K. Naik, M.S. Hanay, W. K. Hiebert, X. L. Feng et M. L. Roukes, 2009, "Towards single-molecule nanomechanical mass spectrometry", Nature Nanotechnology 4: 445-450. doi:10.1038/NNANO.2009.152.

Un problème majeur de ce système est l'utilisation d'un seul NEMS pour détecter les particules qui sont projetées sur sa surface : celle-ci peut valoir typiquement $1\mu m^2$ alors que le faisceau de particules, suivant le type de système d'injection, peut avoir une aire projetée de l'ordre de quelques millimètres carrés à quelques centimètres carrés.

On voit là encore l'aspect critique de l'utilisation de réseaux extrêmement denses de NEMS afin de maximiser la surface de capture. Mais dans le cas de la NEMS-MS, un problème additionnel se pose par rapport aux deux cas précédents : il s'agit ici de mesurer la masse d'une particule qui est ponctuelle ou du moins plus petite que la surface du résonateur et qui n'est pas répartie sur cette surface. Or, le décalage en fréquence induit par l'ajout d'une particule dépend non seulement de la masse mais aussi de la position d'arrivée de la particule sur le résonateur. Il est alors nécessaire de mesurer, en temps réel, plusieurs fréquences de résonance au lieu d'une seule. A ce sujet, on se reportera au document suivant :

S. Dohn, W. Svendsen, A. Boisen et O. Hansen, 2007, "Mass and position détermination of attached particles on cantilever based mass sensors", Review of Scientific Instruments 78: 103303. doi:10.1063/1.2804074.

La structure mécanique n'est pas forcément résonante, comme dans le cas où l'on souhaite mesurer les forces exercées par une particule, molécule ou objet biologique extérieur, sur une structure mécanique.

Dans chacun des cas (1) à (3), les éléments (tridimensionnels) utilisés pour la détection des particules, tels que des poutres ou des cantilevers, ont une dimension (longueur) au moins 10 fois plus importante que les deux autres (et peuvent donc être considérés comme unidimensionnels) ; et cette dimension est dans le plan du substrat sur lequel est formé le dispositif considéré.

De plus, les moyens de transduction utilisés sont (a) soit dans le même plan que le dispositif, (b) soit dans un plan parallèle à celui du dispositif et espacé de ce dernier par des couches déposées sur le dispositif lui-même.

Au sujet du cas (a), on se reportera au document suivant :

E. Mile, G. Jourdan, I. Bargatin, S. Labarthe, C. Marcoux, P. Andreucci, S. Hentz, C. Kharrat, E. Colinet et L. Duraffourg, 2010, "In-plane nanoelectromechanical resonators based on silicon nanowire piezoresistive détection", Nanotechnology 21 (16) (23 avril): 165504. doi:10.1088/0957-4484/21/16/165504

et en particulier à la figure 1 de ce document.

Au sujet du cas (b), on se reportera au document suivant :

Mo Li, H.X. Tang et M. L. Roukes, 2007, "Ultra-sensitive NEMS-based cantilevers for sensing, scanned probe and very high-frequency applications", Nature nanotechnology 2 (2) (Février): 114-20. doi:10.1038/nnano.2006.208

et en particulier à la figure 1 de ce document. On pourra également se reporter au document suivant :

P. Ivaldi, J. Abergel, M. H. Matheny, L. G. Villanueva, R.B. Karabalin, M. L. Roukes, P. Andreucci, S. Hentz et E. Defaÿ, 2011, "50 nm thick AIN film-based piezoelectric cantilevers for gravimétrie détection", Journal of Micromechanics and Microengineering 21: 085023. doi:10.1088/0960-1317/21/8/085023 et en particulier à la figure 3 de ce document.

Il faut donc sortir les connexions dans le même plan que le dispositif lui-même.

Ces caractéristiques (éléments unidimensionnels dans le plan du substrat, nécessité de sortir les connexions dans le plan du dispositif) empêchent d'obtenir de bons rapports SA/SI, où SA représente la surface active c'est-à-dire la surface vibrante du MEMS ou du NEMS considéré, et SI représente la surface inactive c'est-à-dire la surface qui ne vibre pas. Ainsi, la surface de capture des éléments à détecter est extrêmement faible. Il est par exemple très difficile d'obtenir une densité de surface active qui soit supérieure à 1% avec ces caractéristiques.

On connaît également dans l'art antérieur les documents suivants :

- L'article de Lasse J. Kauppinen & al., intitulé « Micromechanically tuned ring resonator in silicon on insolator », April 1, 2011, Vol. 36, No. 7, Optics Letters, qui décrit un micro-résonateur en anneau, ajustable en longueur d'onde à l'aide d'une poutre pouvant être positionnée à différents emplacements dans son champ évanescent;

- L'article de S. V. Pham & al., intitulé « Read-Out of Cantilver Bending With a Grated Waveguide Optical Cavity », IEEE Photonics Technology letters, Vol. 23, No. 4, February 15, 2011, qui décrit la lecture de la courbure d'une poutre au moyen d'une cavité optique ;

- L'article de Gino Putrino & al., intitulé « Integrated Resonant Optical Readout Applicable to Large Arrays of MEMS Beams », IEEE Photonics Technology letters, Vol. 24, No. 24, December 15, 2012, qui décrit une mesure de déflection sur une matrice de poutres, par interférométrie ;

- L'article de Rekha R & al., intitulé « Design of MOEM Vivration Sensor Using Optical MicroRing Resonator and MicroCantilver Beam », TENCON 2011, qui décrit un capteur de vibration mesurant les vibrations d'une poutre à l'aide d'un micro-résonateur en anneau ;

- L'article de Houxun Miao & al., intitulé « A MEMS Controlled Cavity Optomechanical Sensing System », CLEO Technical Digest, OSA 2012, qui décrit un système d'étude des modes de vibration d'une poutre, à l'aide d'un résonateur optique en micro-disque ;

- Le brevet US 6,392,233, qui décrit un capteur infrarouge basé sur une modulation de signal dans un guide d'onde ;

- L'article de Mani Hossein-Zadeh & al., intitulé « An Optomechanical Oscillator on a Silicon Chip », IEEE Journal of selected topics in quantum electronics, Vol. 16, No. 1, January/February 2010, qui décrit un dispositif à base de microtoroïdes mis en mouvement par une pression de radiation ;

- Le brevet US 6,909,824, qui décrit un coupleur optique ; et

- La demande de brevet US 2011/0305413, qui décrit un modulateur optique.

## EXPOSÉ DE L'INVENTION

La présente invention a pour but de remédier aux inconvénients précédents.

Selon un aspect de l'invention, on découpe la surface d'une plaquette (en anglais, *wafer*) en « pixels » élémentaires, ayant une très bonne densité de couverture, et l'on place tout ce qui ne participe pas à cette surface de capture (par exemple les moyens de transduction, les connexions, les contacts) sous ces pixels.

On précise que l'invention ne se limite pas à l'utilisation d'une plaquette : le support que comprend le dispositif, objet de l'invention, peut être obtenu autrement.

Selon un autre aspect de l'invention, on utilise une transduction optique. Une telle transduction est plus simple qu'une transduction électrique, par exemple une transduction piézorésistive qui nécessite la reprise de contacts de très petites tailles, avec une grande densité, à des niveaux inférieurs à la surface active, par des interconnexions du genre de celles qui sont utilisées dans les procédés CMOS. Cela peut conduire, en pratique, jusqu'à nécessiter une co-intégration CMOS, puisque le nombre de connexions électriques peut être très grand.

De façon précise, la présente invention a pour objet un dispositif opto-mécanique selon la revendication 1.

Par « champ évanescent interagissant avec l'élément mécanique », on entend que ce champ évanescent est perturbé par le déplacement de l'élément mécanique.

Le ou les éléments mécaniques peuvent être résonants ou non résonants.

Le support peut avoir une surface plane. Et l'élément mécanique peut avoir une forme allongée, par exemple la forme d'une poutre, qui peut être perpendiculaire, ou non, à cette surface.

De préférence, l'élément mécanique comporte soit un élément perpendiculaire au plan des couches à partir desquelles est formé le dispositif, présentant une extrémité ancrée au support et une extrémité apte à se déplacer dans un plan parallèle au plan des couches, soit un élément parallèle au plan des couches, suspendu par au moins deux extrémités au support et apte à se déplacer perpendiculairement au plan des couches.

Selon un mode de réalisation particulier, ledit élément mécanique constitue un résonateur mécanique de fréquence de résonance donnée.

Le nombre de dispositifs optiques peut être inférieur ou égal au nombre d'éléments mécaniques.

Dans le cas du mode de réalisation particulier mentionné plus haut, le dispositif, objet de l'invention, peut comporter un dispositif optique par élément mécanique ou un dispositif optique pour un groupement d'éléments mécaniques de fréquences de résonance différentes les unes des autres.

Selon l'invention, le dispositif optique comprend en outre un résonateur optique qui est optiquement couplé au guide d'onde. Ce résonateur optique peut être en forme d'anneau. Mais l'invention ne se limite pas à cette forme : d'autres formes sont également envisageables, telles qu'une forme d'hippodrome (en anglais, *racetrack*), une forme ovale ... ou une combinaison de ces formes.

Selon l'invention, l'élément mécanique comprend une zone réceptrice, apte à recevoir une ou plusieurs particules qui sont aptes à provoquer ou modifier le déplacement de l'élément mécanique en vue de déterminer une propriété physique de la particule ou des particules à partir d'un signal fourni par le dispositif de détection.

L'élément mécanique peut comprendre une poutre sensiblement rectiligne, ayant une première extrémité ancrée au support, et une deuxième extrémité pourvue d'un plateau constituant la zone réceptrice.

Dans ce cas, selon un mode de réalisation particulier de l'invention, la poutre est sensiblement perpendiculaire au support et le plateau est sensiblement perpendiculaire à la poutre.

Selon un mode de réalisation particulier du dispositif optomécanique, objet de l'invention, l'élément mécanique constitue un résonateur mécanique dont la fréquence de résonance varie lorsque la zone réceptrice reçoit la ou les particules.

Selon un premier mode de réalisation particulier de l'invention, la zone réceptrice est prévue pour accueillir des particules matérielles.

Par « particule matérielle », on entend aussi bien un atome qu'un agrégat d'atomes, une molécule, un agrégat de molécules, voire un groupement d'éléments (notamment des cellules ou des protéines) associés par des liaisons non covalentes.

Selon un deuxième mode de réalisation particulier, la zone réceptrice comprend un matériau apte à absorber des particules constituées par des photons dans une gamme prédéfinie de fréquences électromagnétiques.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 illustre schématiquement le principe d'une détection optomécanique,
- la figure 2 illustre schématiquement le couplage d'un NEMS avec un anneau optique résonant,
- les figures 3A et 3B illustrent schématiquement un mode de réalisation particulier du dispositif, objet de l'invention,
- les figures 4A et 4B illustrent schématiquement un autre mode de réalisation particulier du dispositif, objet de l'invention,
- la figure 5A à 5J illustrent schématiquement des étapes d'un procédé pour fabriquer un dispositif conforme à l'invention, et
- les figures 6A à 6E illustrent schématiquement des étapes d'un autre procédé pour fabriquer un dispositif conforme à l'invention.

## EXPOSÉ DÉTAILLÉ DE MODES DE RÉALISATION PARTICULIERS

Selon un aspect de l'invention, on utilise non pas une transduction électrique mais une transduction optique en champ proche. Le principe de cette transduction est schématiquement illustré par la figure 1.

A ce sujet, on se reportera au document suivant :

T.J. Kippenberg et al., 2008, Cavity optomechanics : back-action at the mesoscale, Science (New York, N.Y.), 321(5893), pp. 1172-6.

La transduction repose sur le couplage d'un degré de liberté mécanique (oscillateur mécanique 2) avec un degré de liberté optique qui résulte, par exemple, d'un champ électromagnétique établi dans une cavité optique 4. Comme on le voit, cette dernière est alimentée par un faisceau laser 6, par l'intermédiaire d'un miroir semi-transparent 8, et délimitée par un autre miroir semi-transparent 10 et par un miroir mobile 12 faisant partie de l'oscillateur mécanique. En pratique, le couplage mentionné plus haut est obtenu lorsqu'un déplacement du miroir mobile 12 modifie les modes de résonance de la cavité 4.

La référence 13 désigne un photodétecteur de phase/amplitude de la lumière issue du miroir semi-transparent 10.

Par ailleurs, le champ évanescent d'un guide d'onde optique est sensible aux modifications du milieu environnant (par exemple indice de réfraction, présence ou non d'un objet, variation de distance par rapport à ce dernier) qui affectent par conséquent les modes de propagation du champ électromagnétique.

Dans une cavité résonante, de type micro-disque, possédant de grandes finesses, cela peut conduire à d'importants déplacements de fréquence de résonance optique. Un objet couplé à une cavité résonante par le champ évanescent du guide d'onde optique peut moduler la fréquence de résonance optique de la cavité à la fréquence de vibration mécanique de celle-ci.

Cette transduction a déjà été utilisée à l'échelle nanométrique, comme le montre la figure 2, en couplant des dispositifs mécaniques nanométriques 14 avec des résonateurs optiques en forme d'anneau, du genre du résonateur 16, couplé à un guide d'onde optique 18.

A ce sujet, on se reportera au document suivant :

G. Anetsberger et al., 2009, Near-field cavity optomechanics with nanomechanical oscillators, Nature Physics, 5(12), pp. 909-914.

Cela a permis d'atteindre des résolutions en déplacement en-dessous de 1fm/Hz$^{1/2}$.

Une telle transduction permet également un actionnement grâce à des forces de gradient optique et permet donc une transduction tout optique du résonateur mécanique. A ce sujet, on se reportera au document suivant :

M. Li et al., 2009, Broadband all-photonic transduction of nanocantilevers, Nature Nanotechnology, 4 (June), pp. 377-382**.**

Outre une excellente résolution de mesure de déplacement mécanique, une grande gamme dynamique, la possibilité d'un fonctionnement de façon tout optique, ce type de transduction possède un grand nombre d'avantages.

Par exemple, sous certaines conditions (couplage fort, constantes de temps optiques et mécaniques comparables), on peut obtenir des effets d'action-retour (en anglais, *bock-action effects*) entraînant des auto-oscillations. Cela simplifie grandement le contrôle et l'asservissement du dispositif mécanique à sa fréquence de résonance, ou permet une réduction du bruit. A ce sujet, on se reportera au document suivant :

M. Hossein-zadeh et al., 2010, An Optomechanical Oscillator on a Silicon Chip, IEEE Journal of selected topics in quantum electronics, 16(1), pp. 276-287**.**

De plus, tout type de matériau peut être utilisé, et non pas seulement des matériaux conducteurs.

Et la bande passante optique est très importante, ce qui permet d'utiliser des dispositifs mécaniques de très faible masse, résonant à très haute fréquence (typiquement quelques gigahertz). Cela reste une gageure avec une transduction électrique. Cette bande passante permet également de multiplexer un grand nombre de dispositifs mécaniques.

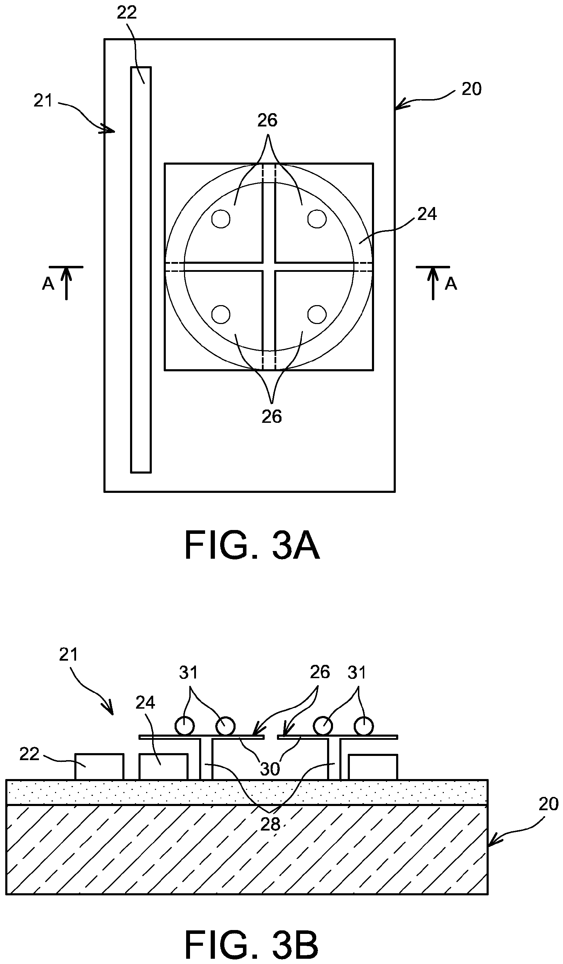

La présente invention propose d'exploiter ces avantages. Selon un aspect de l'invention, on place tout ou partie des moyens de transduction optiques sous la surface active mécanique, comportant notamment le ou les éléments mécaniques et le ou les dispositifs d'actionnement /détection, ces dispositifs correspondant au dispositif optique 21 des figures 3A et 3B.

Les figures 3A et 3B illustrent schématiquement un exemple du dispositif optomécanique, objet de l'invention. La figure 3A est une vue de dessus du dispositif et la figure 3B est la coupe AA de la figure 3A. Dans cet exemple, le dispositif constitue un pixel élémentaire.

Il comprend un support 20 et, sur celui-ci, un dispositif optique 21 fixe par rapport au support 20 et comprenant un guide d'onde optique 22 (il y en aurait plusieurs pour un fonctionnement multi-ports) et un résonateur en forme d'anneau 24 qui est couplé au guide d'onde 22 par un couplage évanescent et qui est accordé, par exemple, sur une longueur d'onde optique proche de 1550nm.

On précise que le dispositif représenté sur les figures 3A et 3B est alimenté en énergie lumineuse par un laser non représenté, optiquement couplé au guide d'onde 22.

Un certain nombre d'éléments mécaniques 26 sont ancrés au support 20 et aptes à se déplacer par rapport à celui-ci. Ils constituent des résonateurs mécaniques. Dans l'exemple, il y a quatre résonateurs 26 mais il pourrait y en avoir un seul et leur nombre pourrait aller jusqu'à quelques dizaines.

Les résonateurs 26 ont des fréquences de résonance proches mais distinctes les unes des autres. Chacun module donc l'énergie lumineuse à sa propre fréquence. On peut donc récupérer l'information de chacune de ces fréquences en démodulant un signal optique de sortie, issu de moyens de photodétection non représentés, optiquement couplés au guide d'onde optique.

Cet adressage fréquentiel est similaire à la technique qui est divulguée par le document suivant, auquel on se reportera :

WO 2012/172204**, Système de mesure à résonateurs électromécaniques, procédé de fabrication d'un tel système et procédé de lecture d'au moins deux résonateurs électromécaniques, invention de E. Colinet et al.**

Revenons aux figures 3A et 3B. On voit que chaque élément mécanique 26 comprend une poutre sensiblement rectiligne 28, apte à se déplacer par rapport au support 20. Une extrémité de la poutre 28 est ancrée au support 20 et l'autre extrémité est pourvue d'un plateau 30 sensiblement plan, perpendiculaire à la poutre et constituant une zone de réception de particules 31 que l'on veut détecter et dont on veut mesurer une propriété physique. Ces particules modifient les fréquences de résonances respectives des poutres.

Comme on le voit, les poutres sont entourées par le résonateur optique en forme d'anneau 24 et ce dernier est sous les plateaux 26.

Chacun des éléments mécaniques peut vibrer

- sur son mode fondamental (pour un plateau 30 suffisamment rigide, ce serait un mode de flexion de la poutre verticale 28),
- ou sur l'un des modes supérieurs qui peuvent être des modes de flexion de la poutre verticale 28 (mouvement mécanique dans le plan),
- ou sur un mode extensionnel (vibration du pilier vertical selon son axe, le plateau 30 restant rigide),
- ou encore sur un mode de résonance de flexion du plateau 30 seul (mouvement mécanique vertical).

Dans tous les cas, la poutre 28 et le plateau 30 doivent être suffisamment proches du résonateur optique 24, typiquement à quelques 100nm de celui-ci, pour permettre un bon couplage optomécanique avec le résonateur optique.

Dans le cas où l'ajout de masse, dû à la réception des particules 31 (qui modifient le déplacement des poutres), est réparti de manière homogène sur le plateau (détection d'un gaz par exemple), un seul mode par élément mécanique permet de mesurer la masse ajoutée.

Dans le cas d'un ajout de masse ponctuel (détection d'une cellule ou d'une protéine unique par exemple), les trois premiers cas de fonctionnement permettent de n'utiliser qu'un seul mode pour mesurer la masse ajoutée, contrairement au cas des poutres NEMS classiques ou au cas du quatrième cas de fonctionnement envisagé (mode où le plateau 30 vibre en flexion) puisqu'alors le décalage en fréquence dépend également de la position de la particule à mesurer.

Au sujet du cas des poutres NEMS classiques et du nombre de modes requis pour quantifier un ajout de masse ponctuelle, on se reportera au document suivant :

M.S. Hanay et al., 2012, Single-protein nanomechanical mass spectrometry in real time, Nature Nanotechnology, 7 (September), pp. 602-608.

On peut également envisager d'utiliser un agencement du genre de celui qui est illustré par les figures 3A et 3B, mais sans résonateur optique. Dans ce cas, les résonateurs mécaniques 26 doivent être placés le long du guide d'onde 22. Alors, ces résonateurs mécaniques 26 ne modulent pas une fréquence de résonance optique : ils modulent l'énergie lumineuse qui est transmise par le guide d'onde 22. Les fréquences de résonance respectives des résonateurs mécaniques 26 doivent encore être distinctes les unes des autres.

D'autre part, dans le cas où les structures mécaniques ne sont pas résonantes, elles modifient l'énergie lumineuse transmise ou la fréquence des résonateurs optiques, modification que l'on mesure pour remonter au déplacement statique ou quasi-statique des structures mécaniques.

Un dispositif optomécanique, du genre de celui qui est représenté sur les figures 3A et 3B, permet d'utiliser des résonateurs mécaniques qui sont extrêmement légers et donc très sensibles à une masse ajoutée, conduisant à une résonance à haute fréquence. Et l'utilisation d'un pixel du genre de celui qui est illustré par les figures 3A et 3B permet d'emblée de diminuer fortement le nombre de ports nécessaires pour adresser les différents résonateurs mécaniques.

De plus, un dispositif du genre de celui qui est représenté sur ces figures 3A et 3B permet de monter en cascade de tels pixels, le long d'un seul guide d'onde, et de réaliser des réseaux extrêmement denses, comportant un grand nombre de résonateurs mécaniques, le tout avec un nombre minimum d'entrées/sorties. Cela simplifie de manière drastique le besoin d'interconnexions. Dans ce cas, les résonateurs optiques sont respectivement accordés sur des longueurs d'onde légèrement différentes les unes des autres, ce qui permet d'adresser chacun de ces résonateurs par une longueur d'onde optique particulière. Tous ces signaux sont envoyés dans le même guide d'onde, et démodulés simultanément à la sortie de ce guide d'onde.

Il est possible de n'utiliser qu'un seul résonateur mécanique couvrant l'intégralité du résonateur optique, et comportant par exemple une membrane à cet effet. Cependant, un diamètre minimal (typiquement $10\mu m$) est alors imposé au résonateur optique afin de garantir une qualité de résonance suffisante. Il en résulte un dispositif mécanique volumineux, ce qui réduit sa sensibilité à un ajout de masse, à moins que le dispositif soit ultra-mince et élancé.

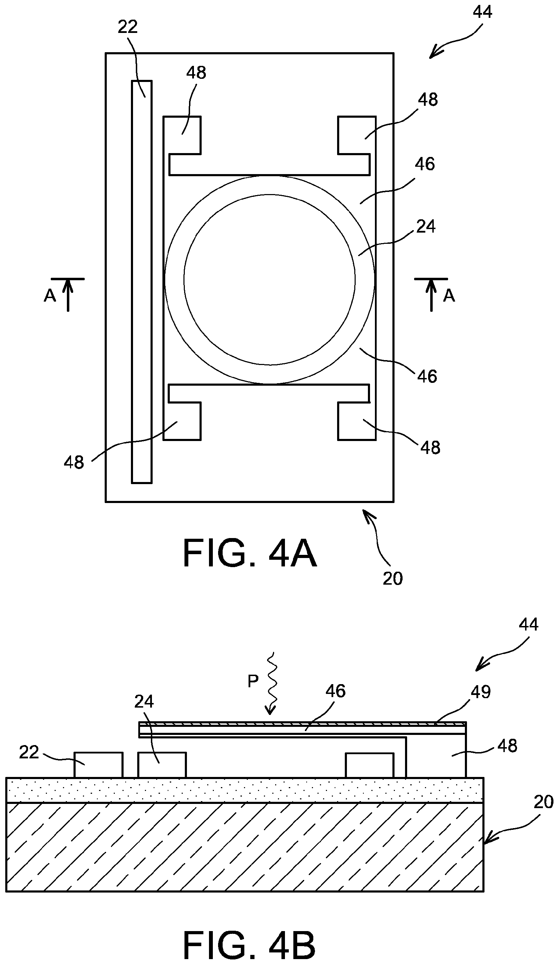

Les figures 4A et 4B illustrent schématiquement un exemple de pixel comportant un seul résonateur mécanique pour un résonateur optique. La figure 4A est une vue de dessus du pixel et la figure 4B est la coupe AA de la figure 4A.

On voit encore le support 20 portant le guide d'onde optique 22 et le résonateur optique en anneau 24. Un élément 44, constituant un résonateur mécanique, est associé au résonateur optique 24 et comprend une membrane 46 qui couvre la totalité du résonateur 24 et qui repose sur le support 20 par l'intermédiaire de piliers 48. Dans l'exemple représenté, la membrane a sensiblement la forme d'un carré et les piliers sont respectivement situés aux quatre sommets de ce carré, comme on le voit sur la figure 4A.

Dans les exemples ci-dessus, et par souci de simplicité, on a implicitement considéré que l'actionnement de chaque élément mécanique et la détection de la variation de la fréquence de déplacement de cet élément étaient tous deux optiques.

Toutefois, l'actionnement peut également être externe et s'effectuer par exemple au moyen d'un élément vibrant piézoélectrique (en anglais, *piezoshaker*), ou être de type électrique, par exemple électrostatique (en plaçant une électrode à proximité du résonateur mécanique, par exemple dans une zone dopée dans un substrat constituant le support 20), ou être obtenu à l'aide d'une électrode conductrice, réalisée au même niveau que le résonateur mécanique.

Par ailleurs, les exemples de l'invention donnés ci-dessus concernent la détection gravimétrique. Mais l'invention ne se limite pas à une telle application : elle peut être appliquée à tout type de détection fréquentielle (ou de déplacement statique), par exemple dans le domaine de l'imagerie térahertz ou de la bolométrie.

Dans ce cas, les plateaux 30 des figures 3A et 3B et la membrane 46 des figures 4A et 4B peuvent être recouverts, voire réalisés de manière massive, à l'aide d'un matériau 49 (figure 4B) absorbant des photons P dans la gamme de fréquences électromagnétiques étudiée. Dans le cas d'un rayonnement infrarouge pour la bolométrie par exemple, ce matériau peut être le titane.

On considère ci-après la fabrication de dispositifs conformes à l'invention.

Les guides d'ondes peuvent être réalisés en silicium ou en nitrure de silicium sur un support rigide, une plaque de silicium par exemple. Il est également possible de réaliser le circuit photonique sur un substrat souple, avec des guides d'onde optique en polymère.

Les MEMS ou les NEMS susceptibles d'être utilisés dans l'invention peuvent être en silicium, en nitrure de silicium, en silice, en carbure de silicium, ou en tout autre matériau, même polymère. Et les structures suspendues sont de préférence en silicium, en nitrure de silicium ou en carbure de silicium.

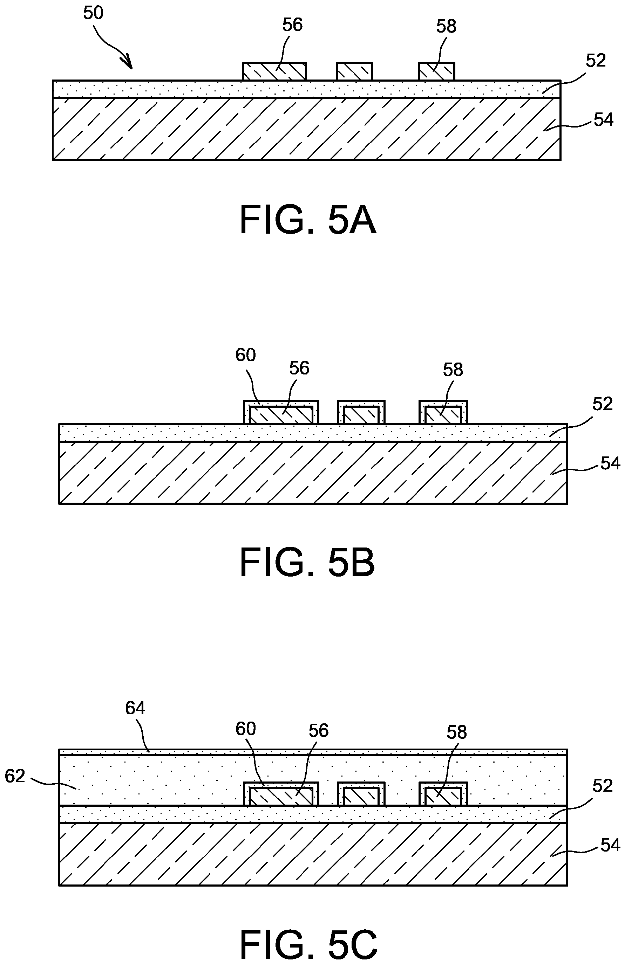

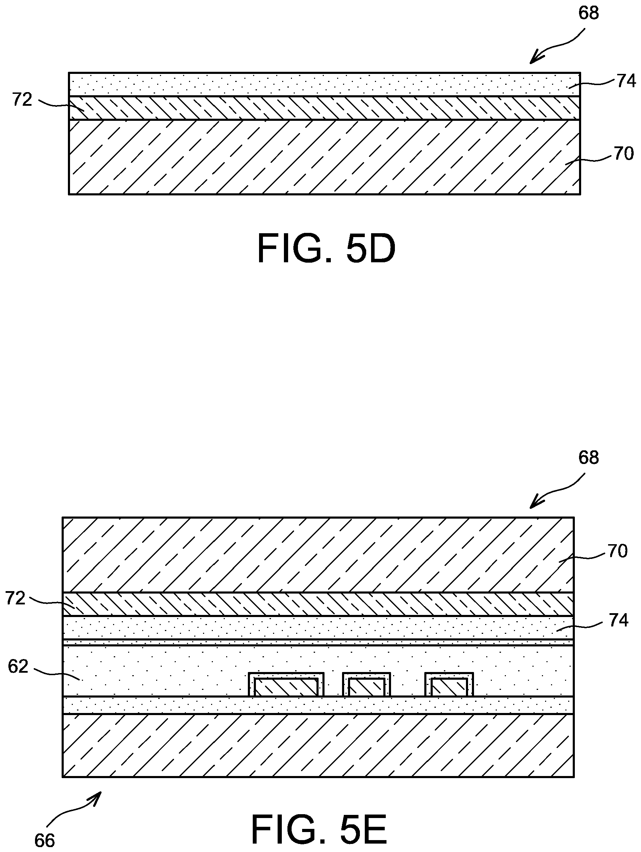

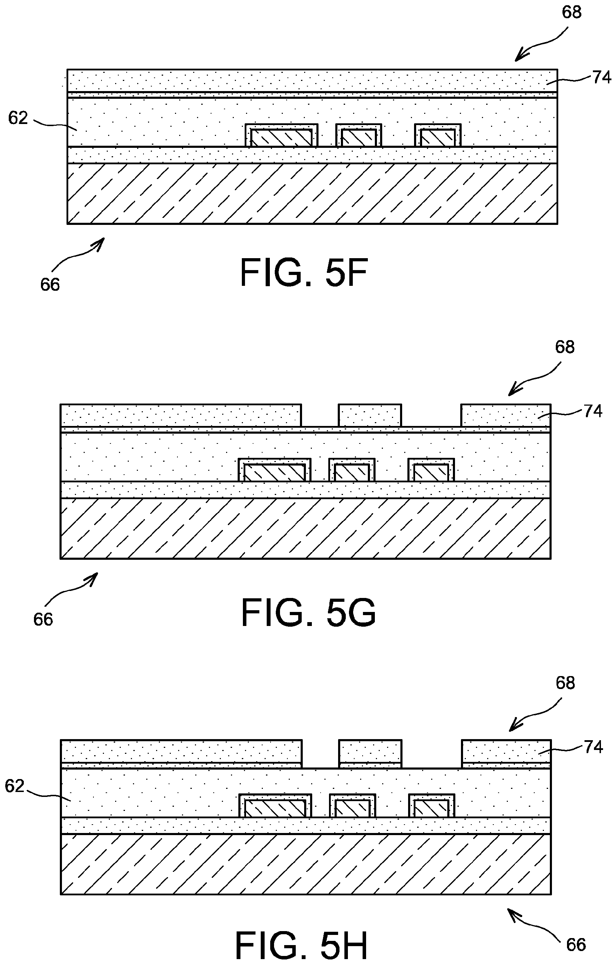

I. Premier exemple de procédé de fabrication (figures 5A à 5J)

I.1 Fabrication de la plaquette (en anglais, *wafer*) photonique (figure 5A)

Pour fabriquer le dispositif, on part d'une plaque BOX (pour : *buried oxyde*) 50 comprenant une couche de silice 52 de 200 nm d'épaisseur sur un substrat en silicium 54. Elle est structurée pour obtenir les circuits photoniques voulus (processus standard). Chaque guide d'onde 56 est en silicium et a une section de l'ordre de $100 \times 100 \, nm^2$ à $500 \times 500 nm^2$ par exemple. Chaque résonateur optique en anneau 58 a un rayon interne de l'ordre de $5 \mu m$ à $20 \mu m$, une largeur de l'ordre de 200 à 500 nm et une épaisseur de l'ordre de 200 nm à 500 nm. Les longueurs typiques des guides d'onde intra-puce vont d'environ $100 \, \mu m$ à quelques millimètres.

A ce sujet, on se reportera par exemple aux documents suivants :

> US 2012/0063717, **Method of producing a photonic device and corresponding photonic device, invention de Laurent Grenouillet et al.**
> US 2010/0265504, **Optical device with superimposed photonic circuits for coupling to one or more optical waveguides, invention de Christophe Kopp et al.**

I.2 Préparation/protection de la plaquette (figures 5B et 5C)

On dépose une fine couche d'oxyde 60 pour la protection des guides d'ondes optique en silicium, par exemple par PECVD. L'épaisseur de cette couche 60 vaut 10 nm par exemple.

On dépose ensuite une couche sacrificielle 62 en polysilicium, sur une hauteur supérieure à 500 nm. Cette hauteur vaut par exemple 550 nm pour laisser, à la libération finale, un espace de 50nm entre le MEMS ou le NEMS utilisé et le guide d'onde. (En variante, on peut déposer une couche d'arrêt de gravure de $HfO_2$ directement sur les guides, ou sur les quelques nanomètres d'oxyde de silicium déposés avant, puis faire un dépôt d'oxyde de silicium de 500 nm par exemple, qui servira de couche sacrificielle pour une libération par l'acide fluorohydrique).

Puis on dépose une dernière couche mince d'oxyde 64 de 10 nm d'épaisseur, par PECVD. (Cette étape n'est pas utile dans la variante mentionnée ci-dessus).

On planarise et l'on nettoie la surface de la structure 66 ainsi obtenue pour la préparer à un collage. La couche 64 sert de couche d'arrêt pendant la structuration des MEMS ou des NEMS.

I.3 Collage de la couche supérieure, future couche de MEMS ou NEMS (figures 5D à 5F)

A la surface de la plaquette photonique constituée par la structure 66, on colle une plaquette 68 de type SOI, comportant 500 $\mu m$ de Si de fond 70, 400 nm d'oxyde enterré BOX 72 et 200 nm de silicium de dessus 74. Le collage des plaquettes 66 et 68 est par exemple un collage moléculaire. On précise qu'au lieu d'une plaquette de type SOI, on peut utiliser une plaquette de Si que l'on amincit puis que l'on planarise jusqu'à ce que l'on obtienne l'épaisseur souhaitée.

Ensuite, on amincit la structure résultante, en éliminant toute l'épaisseur de silicium 70 soit 500 $\mu m$, pour déboucher sur l'oxyde enterré (BOX).

Puis on retire l'oxyde enterré 72 (figure 5F) et l'on planarise le silicium de dessus 74 afin d'obtenir une épaisseur souhaitée de l'ordre de 200 nm à 10 nm. On obtient alors un empilement de deux plaquettes, avec une interface silicium/oxyde. Avant structuration des MEMS ou des NEMS, on retrouve ainsi la configuration d'un SOI : 200 nm de Si de dessus/10 nm d'oxyde /550 nm de polysilicium.

I.4 Structuration des réseaux de MEMS ou de NEMS (figures 5G à 5I)

On réalise des étapes de lithographie/gravure RIE (pour : *reactive ion etching*) classiques pour structurer les MEMS ou les NEMS dans la couche de silicium 74 (voir par exemple l'article de E. Mile et al., déjà cité). On débouche alors sur la couche d'oxyde 62 de 10 nm d'épaisseur. (Mais dans la variante mentionnée plus haut, on débouche directement sur les 550 nm d'oxyde de silicium qui servent de couche sacrificielle).

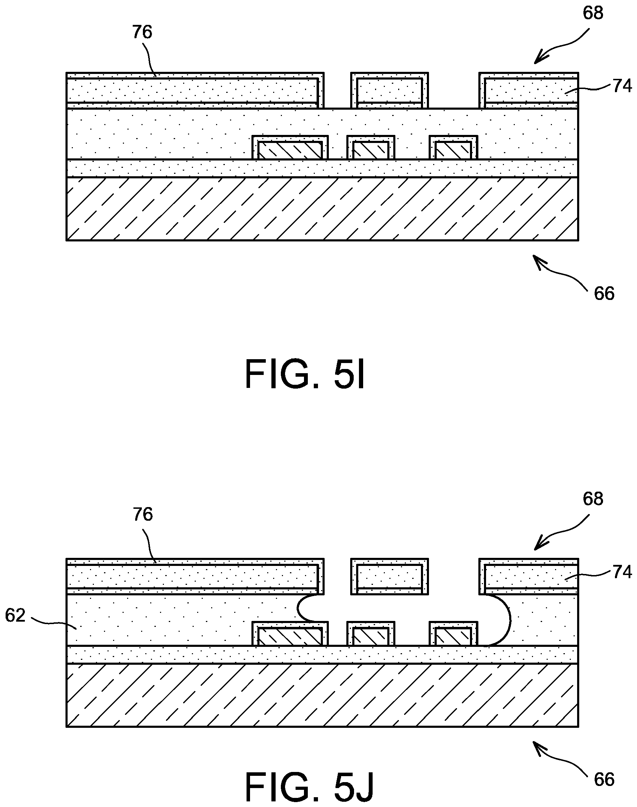

Ensuite, on oxyde (figure 5I) les MEMS ou les NEMS de façon conforme, sur une épaisseur de 10 nm par exemple, afin de protéger ces structures MEMS ou NEMS durant la libération de la couche sacrificielle en Si. La couche d'oxyde qui en résulte a la référence 76. (Dans la variante mentionnée plus haut, cette étape n'est pas nécessaire).

Le réseau de MEMS ou de NEMS aura une surface plus faible que le circuit photonique afin de laisser de la place pour l'injection de la lumière par l'intermédiaire de fibres optiques.

On réalise ensuite une lithographie puis une gravure de l'oxyde (10 nm+10 nm) par RIE (gravure anisotrope) sur les zones qui doivent être libérées. (Dans la variante mentionnée plus haut, cette étape n'est pas nécessaire).

I.5 Libération des structures mobiles (figure 5J)

On libère les structures MEMS ou NEMS par gravure isotrope du silicium polycristallin à l'aide de $XeF_2$. (Dans la variante mentionnée plus haut, on procède autrement : on libère à l'aide d'acide fluorohydrique, en gravant les 550 nm d'oxyde de silicium et en s'arrêtant sur le HfO$_2$.

On obtient finalement des structures MEMS ou NEMS suspendues, faites de 10 nm d'oxyde /200 nm à 50 nm de Si /20 nm d'oxyde, au-dessus de guides d'onde en silicium, enrobés d'une couche d'oxyde dont l'épaisseur est comprise entre 5 nm et 10 nm et vaut par exemple 10 nm.

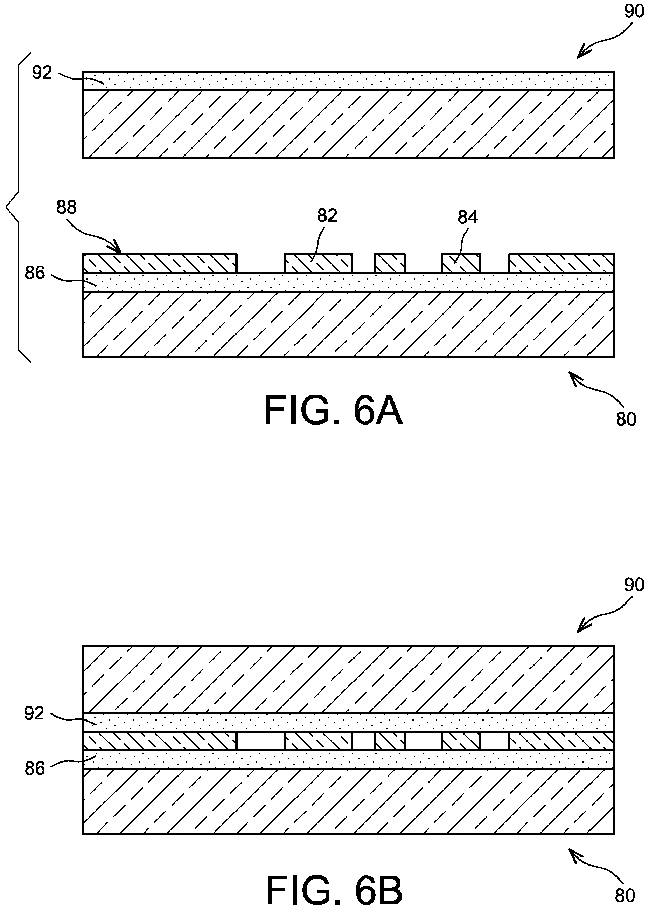

**II. Deuxième exemple de procédé de fabrication (figures 6A à 6E)**

La différence entre ce deuxième exemple et le premier réside dans le collage de la plaquette MEMS ou NEMS sur la plaquette photonique en conservant le relief (collage sur cavités).

Le circuit photonique reste le même. Toutefois, pour la conception de celui-ci, on peut avantageusement prévoir de grandes surfaces de collage. On réalise directement le collage d'une plaquette à l'autre, par exemple par collage moléculaire. Les plaquettes supportant les futurs MEMS ou NEMS sont en silicium et sont recouvertes d'un oxyde qui constituera à la fois l'interface de collage et la couche sacrificielle.

Sur la figure 6A, on voit la plaquette 80 portant un guide d'onde 82 et un anneau optique 84. Ces derniers reposent sur la couche de silice 86 que comporte la plaquette 80. On voit aussi la surface de collage 88 destinée au collage des plaquettes.

On voit également la plaquette 90 en silicium. Elle est pourvue d'une couche superficielle de silice 92 qui est obtenue par PECVD et a une épaisseur de l'ordre de 10 nm à 500 nm par exemple. Cette couche 92 servira de couche sacrificielle, fixant l'intervalle entre le résonateur optique et la structure MEMS ou NEMS.

La figure 6B montre les plaquettes 80 et 90 collées l'une à l'autre. La couche 92 de la plaquette 90 est alors collée à la surface de la plaquette 80, qui a la référence 88 sur la figure 6A.

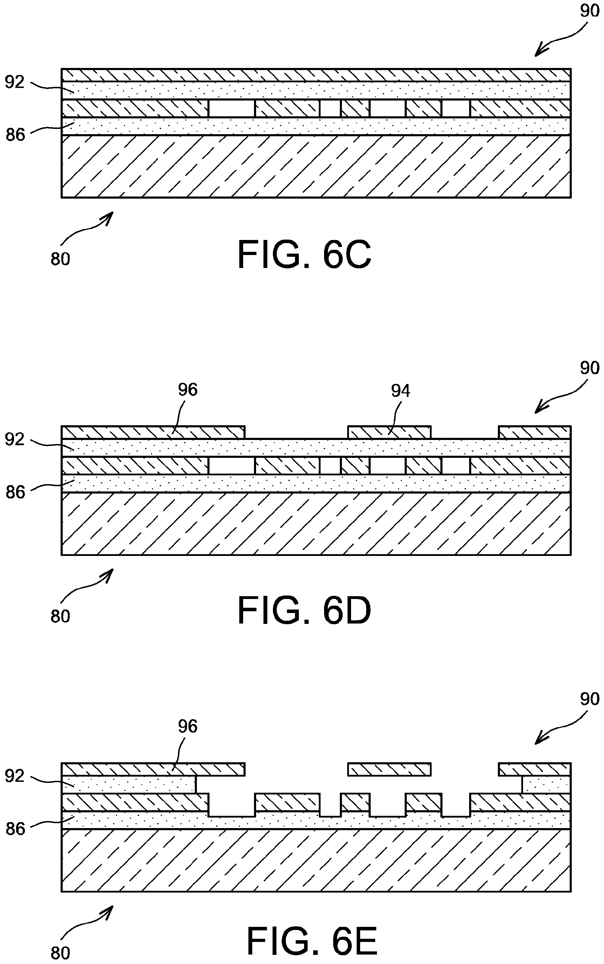

Ensuite (figure 6C), on amincit la plaquette 90, par meulage physico-chimique, puis on réalise une planarisation finale (polissage) pour obtenir l'épaisseur voulue, comprise entre 10 nm et 200 nm.

On structure ensuite (figure 6D) les MEMS ou les NEMS par lithographie/gravure. La référence 94 désigne ces MEMS ou ces NEMS et la référence 96 le support mécanique de ceux-ci.

Il suffit ensuite (figure 6E) de réaliser une libération par gravure HF vapeur par exemple. Dans l'exemple présenté, l'oxyde qui se trouve sous le circuit photonique sera un peu gravé pendant la libération. Ceci peut être contrôlé par différentes voies : l'oxyde de la couche sacrificielle est moins dense que l'oxyde thermique qui est placé sous le circuit photonique et se grave donc plus vite que ce dernier. Il est aussi possible de faire une gravure préalable anisotrope de l'oxyde de silicium afin de limiter le temps de gravure isotrope HF.

**III. Troisième exemple de procédé de fabrication**

Du point de vue du procédé de fabrication, les deux procédés standards de « circuit photonique sur silicium » et de « MEMS ou NEMS sur silicium » peuvent être combinés :

- La plaquette de base peut être une plaquette SOI comportant par exemple une couche de dessus de 220nm d'épaisseur et une couche de BOX de 2µm d'épaisseur.
- Un premier cycle de lithographie/gravure permet de modeler les guides d'onde et les résonateurs optiques dans la couche de dessus de la plaquette SOI, ainsi que les réseaux de couplage, nécessaires à la connexion avec des fibres optiques destinées à relier le dispositif opto-mécanique à un laser et à des moyens de photodétection.

- On procéde ensuite à un dépôt de SiO$_2$ par exemple de 500 nm d'épaisseur.
- On effectue ensuite une planarisation par CMP (polissage mécano-chimique), un arrêt de ce CMP pour définir l'intervalle optique vertical entre les résonateurs optiques et les résonateurs mécaniques.
- On dépose ensuite une couche d'arrêt, par exemple une couche de HfO$_2$ de 20 nm d'épaisseur, pour empêcher que la libération de la structure mécanique ne conduise aussi à libérer les guides optiques et les résonateurs optiques.
- On effectue un cycle de lithographie/gravure pour ouvrir l'empilement couche d'arrêt/oxyde et modeler les ancrages des futures structures mécaniques
- On dépose la couche du matériau dans lequel on souhaite former les structures mécaniques. Il s'agit par exemple d'une couche de silicium polycristallin de 100nm d'épaisseur.
- On effectue un cycle de lithographie/gravure de la couche précédente pour définir les résonateurs mécaniques.
- Puis on libère les structures mécaniques, par exemple à l'aide d'une gravure Hf vapeur.

Les dispositifs optomécaniques conformes à l'invention, décrits en faisant référence aux figures 3A, 3B et 4A, 4B, comportent des éléments mécaniques constituant des résonateurs. Mais l'invention ne se limite pas à un tel cas : un dispositif optomécanique conforme à l'invention peut utiliser un ou plusieurs éléments mécaniques non résonants, par exemple pour détecter une force telle qu'une force cellulaire. Dans ce cas, le dispositif optomécanique n'utilise aucun dispositif d'actionnement du ou des éléments mécaniques, mais seulement un dispositif de détection de déplacement du ou des éléments, à l'aide d'une onde optique, comme on l'a vu plus haut.

De plus, en se référant notamment aux figures 3B et 4B, on précise que l'élément mécanique d'un dispositif conforme à l'invention peut comporter soit un élément perpendiculaire au plan des couches à partir desquelles est formé le dispositif, cet élément présentant une extrémité ancrée au support que comporte le dispositif et une extrémité apte à déplacer dans un plan parallèle au plan des couches, soit un élément parallèle au plan des couches, suspendu par au moins deux extrémités au support et apte à se déplacer perpendiculairement au plan des couches.

**Revendications**

1. Dispositif optomécanique comprenant :

   - un support (20) et, sur celui-ci :

       - au moins un élément mécanique (26, 44) qui est ancré au support et apte à se déplacer par rapport à ce dernier, et qui comprend une zone réceptrice (30, 46) apte à recevoir une ou plusieurs particules (31, P) elles-mêmes aptes à provoquer ou modifier le déplacement de l'élément mécanique (26, 44), et
       - un dispositif (21) de détection du déplacement de l'élément mécanique (26, 44) ou de détection de variations de fréquence du déplacement de l'élément mécanique (26, 44), ladite détection visant à déterminer une propriété physique de la particule ou des particules (31, P) à partir d'un signal fourni par le dispositif de détection, et au moins une partie du dispositif de détection étant disposée sous tout ou partie de l'élément mécanique, entre ce dernier et le support, le dispositif de détection comprenant un dispositif optique (21),

   **caractérisé en ce que** ledit dispositif optique (21) :

       - est fixe par rapport au support,
       - comporte au moins un guide d'onde optique (22) et un résonateur optique (24) couplé optiquement au guide d'onde (22) par couplage évanescent,
       - est disposé sous tout ou partie de l'élément mécanique (26, 44), à une distance déterminée de celui-ci, pour permettre un couplage optomécanique entre l'élément mécanique (26, 44) et le résonateur optique (24), et
       - est prévu pour propager au moins une onde optique ayant une longueur d'onde donnée, apte à interagir avec l'élément mécanique (26, 44),

   et **en ce que** le guide d'onde optique (22) est à une distance déterminée de l'élément mécanique (26, 44) pour que le champ évanescent du guide d'onde optique interagisse avec l'élément mécanique.

2. Dispositif optomécanique selon la revendication 1, dans lequel l'élément mécanique (26, 44) comporte soit un élément perpendiculaire au plan des couches à partir desquelles est formé le dispositif, présentant une extrémité ancrée au support (20) et une extrémité apte à déplacer dans un plan parallèle au plan des couches, soit un élément parallèle au plan des couches, suspendu par au moins deux extrémités au support (20) et apte à se déplacer perpendiculairement au plan des couches.

3. Dispositif optomécanique selon l'une des revendications 1 et 2, dans lequel ledit élément mécanique (26) constitue un résonateur mécanique de fréquence de résonance donnée.

4. Dispositif optomécanique selon l'une quelconque des revendications 1 à 3, dans lequel le nombre de dispositifs optiques est inférieur ou égal au nombre d'éléments mécaniques.

5. Dispositif optomécanique selon la revendication 3, comportant un dispositif optique par élément mécanique ou un dispositif optique pour un groupement d'éléments mécaniques de fréquences de résonance différentes les unes des autres.

6. Dispositif opto-mécanique selon l'une quelconque des revendications 1 à 5, dans lequel le résonateur optique (24) est en forme d'anneau.

7. Dispositif optomécanique selon l'une quelconque des revendications 1 à 6, dans lequel l'élément mécanique (26) comprend une poutre (28) sensiblement rectiligne, ayant une première extrémité ancrée au support (20), et une deuxième extrémité pourvue d'un plateau (30) constituant la zone réceptrice.

8. Dispositif optomécanique selon la revendication 7, dans lequel la poutre (28) est sensiblement perpendiculaire au support et le plateau (30) est sensiblement perpendiculaire à la poutre.

9. Dispositif optomécanique selon l'une quelconque des revendications 1 à 8, dans lequel l'élément mécanique (26) constitue un résonateur mécanique dont la fréquence de résonance varie lorsque la zone réceptrice reçoit la ou les particules (31, P).

10. Dispositif optomécanique selon l'une quelconque des revendications 1 à 9, dans lequel la zone réceptrice (30) est prévue pour accueillir des particules matérielles (31).

11. Dispositif optomécanique selon l'une quelconque des revendications 1 à 9, dans lequel la zone réceptrice (46) comprend un matériau (49) apte à absorber des particules constituées par des photons (P) dans une gamme prédéfinie de fréquences électromagnétiques.

12. Dispositif optomécanique selon l'une quelconque des revendications 1 à 11, **caractérisé en ce que** le dispositif (21) de détection du déplacement de l'élément mécanique (26, 44) ou de variations de fréquence du déplacement forme également un dispositif d'actionnement de l'élément mécanique.

**Patentansprüche**

1. Optomechanische Vorrichtung, enthaltend:

- einen Träger (20) und auf diesem:
- zumindest ein mechanisches Element (26, 44), das an dem Träger verankert ist und sich relativ zu diesem verlagern kann und das einen Aufnahmebereich (30, 46) aufweist, der ein oder mehrere Partikel (31, P) aufnehmen kann, die ihrerseits die Verlagerung des mechanischen Elements (26, 44) bewirken oder modifizieren können, und
- eine Einrichtung (21) zur Erfassung der Verlagerung des mechanischen Elements (26, 44) oder zur Erfassung von Frequenzschwankungen bei der Verlagerung des mechanischen Elements (26, 44), wobei die Erfassung dazu bestimmt ist, eine physikalische Eigenschaft des Partikels oder der Partikel (31, P) ausgehend von einem von der Erfassungseinrichtung gelieferten Signal zu ermitteln, wobei zumindest ein Teil der Erfassungseinrichtung unter dem gesamten oder einem Teil des mechanischen Elements zwischen diesem und dem Träger angeordnet ist, wobei die Erfassungseinrichtung eine optische Einrichtung (21) enthält, **dadurch gekennzeichnet, dass** die optische Einrichtung (21)

- bezüglich des Trägers fest ist,
- zumindest einen Lichtwellenleiter (22) und einen optischen Resonator (24) enthält, der durch evaneszente Kopplung optisch an den Wellenleiter (22) gekoppelt ist,
- unter dem gesamten oder einem Teil des mechanischen Elements (26, 44) in einem bestimmten Abstand davon angeordnet ist, um eine optomechanische Kopplung zwischen dem mechanischen Element (26, 44) und dem optischen Resonator (24) zu ermöglichen, und
- für die Ausbreitung zumindest einer optischen Welle mit einer bestimmten Wellenlänge vorgesehen ist, die mit dem mechanischen Element (26, 44) in Wechselwirkung treten kann,

und dass der Lichtwellenleiter (22) in einem bestimmten Abstand zum mechanischen Element (26, 44) liegt, so dass das evaneszente Feld des Lichtwellenleiters mit dem mechanischen Element in Wechselwirkung tritt.

2. Optomechanische Vorrichtung nach Anspruch 1, wobei das mechanische Element (26, 44) entweder ein Element senkrecht zur Ebene der Schichten enthält, aus denen die Vorrichtung gebildet ist, das ein am Träger (20) verankertes Ende und ein Ende aufweist, das sich in einer zur Ebene der Schichten parallelen Ebene verlagern kann, oder ein zur Ebene der Schichten paralleles Element enthält, das an zumindest zwei Enden am Träger (20) aufgehängt ist und sich senkrecht zur Ebene der Schichten verlagern kann.

3. Optomechanische Vorrichtung nach einem der Ansprüche 1 und 2, wobei das mechanische Element (26) ein mechanischer Resonator mit einer vorgegebenen Resonanzfrequenz ist.

4. Optomechanische Vorrichtung nach einem der Ansprüche 1 bis 3, wobei die Anzahl der optischen Einrichtungen kleiner oder gleich der Anzahl der mechanischen Elemente ist.

5. Optomechanische Vorrichtung nach Anspruch 3, enthaltend eine optische Einrichtung pro mechanisches Element oder eine optische Einrichtung für eine Anordnung mechanischer Elemente mit unterschiedlichen Resonanzfrequenzen.

6. Optomechanische Vorrichtung nach einem der Ansprüche 1 bis 5, wobei der optische Resonator (24) ringförmig ist.

7. Optomechanische Vorrichtung nach einem der Ansprüche 1 bis 6, wobei das mechanische Element (26) einen im Wesentlichen geradlinigen Balken (28) enthält, dessen erstes Ende am Träger (20) verankert ist und dessen zweites Ende mit einer Platte (30) versehen ist, die den Aufnahmebereich bildet.

8. Optomechanische Vorrichtung nach Anspruch 7, wobei der Balken (28) im Wesentlichen senkrecht zum Träger verläuft und die Platte (30) im Wesentlichen senkrecht zum Balken verläuft.

9. Optomechanische Vorrichtung nach einem der Ansprüche 1 bis 8,
wobei das mechanische Element (26) einen mechanischen Resonator bildet, dessen Resonanzfrequenz sich dann ändert, wenn der Aufnahmebereich den bzw. die Partikel (31, P) aufnimmt.

10. Optomechanische Vorrichtung nach einem der Ansprüche 1 bis 9,
wobei der Aufnahmebereich (30) dazu vorgesehen ist, Materialpartikel (31) aufzunehmen.

11. Optomechanische Vorrichtung nach einem der Ansprüche 1 bis 9,
wobei der Aufnahmebereich (46) ein Material (49) enthält, das in der Lage ist, Partikel, die aus Photonen (P) in einem vordefinierten Bereich elektromagnetischer Frequenzen bestehen, zu absorbieren.

12. Optomechanische Vorrichtung nach einem der Ansprüche 1 bis 11,
wobei die Einrichtung (21) zur Erfassung der Verlagerung des mechanischen Elements (26, 44) oder von Frequenzschwankungen bei der Verlagerung auch eine Betätigungsvorrichtung für das mechanische Element bildet.

## Claims

1. An optomechanical device comprising:

   - a support (20) and, on the same:
   - at least one mechanical element (26, 44) which is anchored to the support and able to move with respect to the latter, and which comprises a receiving zone (30, 46) able to receive one or more particles (31, P) that are themselves able to cause or modify movement of the mechanical element (26, 44), and
   - a device (21) for detecting the movement of the mechanical element (26, 44) or for detecting frequency variations in the movement of the mechanical element (26, 44), said detecting aiming at determining a physical property of the particle(s) (31, P) from a signal supplied by the detecting device, and at least one part of the detecting device being disposed under all or part of the mechanical element, between the latter and the support, the detecting device comprising an optical device (21),

   **characterised in that** said optical device (21):

   - is fixed with respect to the support,
   - includes at least one optical waveguide (22) and an optical resonator (24) optically coupled to the waveguide (22) through evanescent coupling,

   - is disposed under all or part of the mechanical element (26, 44), at a predetermined distance from the same, to allow optomechanical coupling between the mechanical element (26, 44) and the optical resonator (24), and
   - is arranged to propagate at least one optical wave having a given wavelength, able to interact with the mechanical element (26, 44),

   and **in that** the optical waveguide (22) is at a determined distance from the mechanical element (26, 44) for the evanescent field of the optical waveguide to interact with the mechanical element.

2. The optomechanical device according to claim 1, wherein the mechanical element (26, 44) includes either an element perpendicular to the plane of the layers from which the device is formed, having one end anchored to the support (20) and one end able to move in a plane parallel to the plane of the layers, or an element parallel to the plane of the layers, suspended by at least two ends to the support (20) and able to move perpendicular to the plane of the layers.

3. The optomechanical device according to one of claims 1 and 2, wherein said mechanical element (26) makes up a mechanical resonator with a given resonant frequency.

4. The optomechanical device according to any of claims 1 to 3, wherein the number of optical devices is lower than or equal to the number of mechanical elements.

5. The optomechanical device according to claim 3, including one optical device per mechanical element or one optical device for a group of mechanical elements of resonant frequencies different from each other.

6. The optomechanical device according to any of claims 1 to 5, wherein the optical resonator (24) is of a ring shape.

7. The optomechanical device according to any of claims 1 to 6, wherein the mechanical element (26) comprises a substantially rectilinear beam (28), having a first end anchored to the support (20), and a second end provided with a tray (30) making up the receiving zone.

8. The optomechanical device according to claim 7, wherein the beam (28) is substantially perpendicular to the support and the tray (30) is substantially perpendicular to the beam.

9. The optomechanical device according to any of claims 1 to 8, wherein the mechanical element (26) makes up a mechanical resonator, the resonant frequency of which varies when the receiving zone receives the particle(s) (31, P).

**10.** The optomechanical device according to any of claims 1 to 9, wherein the receiving zone (30) is arranged to accommodate particles of matter (31).

**11.** The optomechanical device according to any of claims 1 to 9, wherein the receiving zone (46) comprises a material (49) able to absorb particles consisting of photons (P) in a predefined range of electromagnetic frequencies.

**12.** The optomechanical device according to any of claims 1 to 11, **characterised in that** the device (21) for detecting the movement of the mechanical element (26, 44) or frequency variations in the movement also forms a device for actuating the mechanical element.

**FIG. 1**

**FIG. 2**

FIG. 3A

FIG. 3B

FIG. 4A

FIG. 4B

FIG. 5A

FIG. 5B

FIG. 5C

FIG. 5D

FIG. 5E

FIG. 5F

FIG. 5G

FIG. 5H

FIG. 5I

FIG. 5J

FIG. 6A

FIG. 6B

90

92

86

80

## FIG. 6C

96    94    90

92

86

80

## FIG. 6D

96    90

92

86

80

## FIG. 6E

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012034949 A, S. Hentz
- WO 2012034951 A, S. Hentz
- WO 2012034990 A, S. Hentz
- US 6392233 B
- US 6909824 B
- US 20110305413 A
- WO 2012172204 A
- US 20120063717 A
- US 20100265504 A

**Littérature non-brevet citée dans la description**

- **K.L. EKINCI ; Y. T. TANG ; M. L. ROUKES.** Ultimate limits to inertial mass sensing based upon nanoelectromechanical systems. *Journal of Applied Physics,* 2004, vol. 95 (5), 2682
- **J. CHASTE ; A. EICHLER ; J. MOSER ; G. CEBALLOS ; R. RURALI ; A. BACHTOLD.** A nanomechanical mass sensor with yoctogram resolution. *Nature Nanotechnology,* 2012, vol. 7, 301-304
- **I. BARGATIN ; E.B. MYERS ; J. S. ALDRIDGE ; C. MARCOUX ; P. BRIANCEAU ; L. DURAFFOURG ; E. COLINET ; S. HENTZ ; P. ANDREUCCI ; M.L. ROUKES.** Large-scale intégration of nanoelectromechanical systems for gas sensing applications. *Nano letters,* 14 Mars 2012, vol. 12 (3), 1269-74
- **S. GUILLON ; S. SALOMON ; F. SEICHEPINE ; D. DEZEST ; F. MATHIEU ; A. BOUCHIER ; L. MAZENQ ; C. THIBAULT ; C. VIEU ; T. LEÏCHLÉ.** Biological functionalization of massively parallel arrays of nanocantilevers using microcontact printing. *Sensors and Actuators B: Chemical,* Janvier 2012, vol. 161, 1135-1138
- **A.K. NAIK ; M.S. HANAY ; W. K. HIEBERT ; X. L. FENG ; M. L. ROUKES.** Towards single-molecule nanomechanical mass spectrometry. *Nature Nanotechnology,* 2009, vol. 4, 445-450
- **S. DOHN ; W. SVENDSEN ; A. BOISEN ; O. HANSEN.** Mass and position détermination of attached particles on cantilever based mass sensors. *Review of Scientific Instruments,* 2007, vol. 78, 103303
- **E. MILE ; G. JOURDAN ; I. BARGATIN ; S. LABARTHE ; C. MARCOUX ; P. ANDREUCCI ; S. HENTZ ; C. KHARRAT ; E. COLINET ; L. DURAF-FOURG.** In-plane nanoelectromechanical resonators based on silicon nanowire piezoresistive détection. *Nanotechnology,* 23 Avril 2010, vol. 21 (16), 165504

- **MO LI ; H.X. TANG ; M. L. ROUKES.** Ultra-sensitive NEMS-based cantilevers for sensing, scanned probe and very high-frequency applications. *Nature nanotechnology,* Février 2007, vol. 2 (2), 114-20
- **P. IVALDI ; J. ABERGEL ; M. H. MATHENY ; L. G. VILLANUEVA ; R.B. KARABALIN ; M. L. ROUKES ; P. ANDREUCCI ; S. HENTZ ; E. DEFAÿ.** 50 nm thick AIN film-based piezoelectric cantilevers for gravimétrie détection. *Journal of Micromechanics and Microengineering,* 2011, vol. 21, 085023
- **LASSE J. KAUPPINEN.** Micromechanically tuned ring resonator in silicon on insolator. *Optics Letters,* 01 Avril 2011, vol. 36 (7
- **S. V. PHAM.** Read-Out of Cantilver Bending With a Grated Waveguide Optical Cavity. *IEEE Photonics Technology letters,* 15 Février 2011, vol. 23 (4
- **GINO PUTRINO.** Integrated Resonant Optical Readout Applicable to Large Arrays of MEMS Beams. *IEEE Photonics Technology letters,* 15 Décembre 2012, vol. 24 (24
- **REKHA R.** Design of MOEM Vivration Sensor Using Optical MicroRing Resonator and MicroCantilver Beam. *TENCON,* 2011
- **HOUXUN MIAO.** A MEMS Controlled Cavity Optomechanical Sensing System. *CLEO Technical Digest, OSA,* 2012
- **MANI HOSSEIN-ZADEH.** An Optomechanical Oscillator on a Silicon Chip. *IEEE Journal of selected topics in quantum electronics,* Janvier 2010, vol. 16 (1
- **T.J. KIPPENBERG et al.** Cavity optomechanics : back-action at the mesoscale. *Science,* 2008, vol. 321 (5893), 1172-6
- **G. ANETSBERGER et al.** Near-field cavity optomechanics with nanomechanical oscillators. *Nature Physics,* 2009, vol. 5 (12), 909-914
- **M. LI et al.** Broadband all-photonic transduction of nanocantilevers. *Nature Nanotechnology,* Juin 2009, vol. 4, 377-382

- **M. HOSSEIN-ZADEH et al.** An Optomechanical Oscillator on a Silicon Chip. *IEEE Journal of selected topics in quantum electronics,* 2010, vol. 16 (1), 276-287

- **M.S. HANAY et al.** Single-protein nanomechanical mass spectrometry in real time. *Nature Nanotechnology,* Septembre 2012, vol. 7, 602-608